# EUROPEAN PATENT SPECIFICATION

(11) **EP 3 585 181 B1**
(45) Date of publication and mention of the grant of the patent: **03.04.2024**
(21) Application number: 18757260.7
(22) Date of filing: 22.02.2018
(51) Int. Cl.: A23G 3/20, A23G 3/26, A23G 7/02

(54) **SUGAR COATING PROCESS AND COATED PRODUCT PRODUCED THEREBY**
ZUCKERBESCHICHTUNGSVERFAHREN UND DAMIT HERGESTELLTES BESCHICHTETES PRODUKT
PROCÉDÉ D'ENROBAGE DE SUCRE ET PRODUIT ENROBÉ AINSI PRODUIT

(30) Priority: 22.02.2017 US 201762462314 P
(43) Date of publication of application: 01.01.2020
(60) Divisional application: 24152697.9
(73) Proprietor: Mars, Incorporated, McLean, VA 22101 (US)
(72) Inventor: BEN-YOSEPH, Eyal, M., Hackettstown, NJ 07840 (US); REID, Cameron, L., Hackettstown, PA 17088 (US); ORR, Colin, E., Hackettstown, NJ 07840 (US); KASHULINES JR., Peter, Thomas, Hackettstown, NJ 07840 (US); COLLINS, Thomas, M., Hackettstown, NJ 07840 (US); O'CONNOR, Devin, W., Hackettstown, NJ 07840 (US)
(74) Representative: Haseltine Lake Kempner LLP
(86) International application number: PCT/US2018/019153
(87) International publication number: WO 2018/156715

(56) References cited:
- EP-A1- 2 702 875
- EP-A1- 3 072 402
- WO-A1-01/11984
- WO-A1-2014/150438
- WO-A1-2014/152120
- BE-A- 729 406
- DE-A1- 3 302 589
- US-A- 5 495 418
- US-A1- 2001 018 084
- US-A1- 2002 009 517
- US-A1- 2006 034 975
- US-A1- 2006 159 846
- US-A1- 2008 026 131
- US-A1- 2008 026 131

## Description

### FIELD

There is provided a process for forming a hard sugar shell on a plurality of centers.

### BACKGROUND

It is often desired to include a hard sugar coating on a confection, such as in confectionery or candy coated nuts. A hard sugar coating on the exterior of a confection is often referred to as a "hard candy shell". In addition to providing taste enhancement to the confection, the hard sugar coating can be used to provide a colored layer on the confection and/or to provide a barrier between a center of the confection and the outside environment or other outer portions of the confection.

A common method of applying the hard sugar coating is by panning a plurality of centers to create a hard sugar coating on the centers. In panning, the centers are tumbled in a rotating pan (i.e., rotatable drum) and a liquid syrup is dispensed into the pan on the tumbling centers. The tumbling action of the centers aids in distributing the syrup throughout all the centers and in evenly coating the exteriors thereof. After coating the exteriors of the centers with the syrup in the pan, tumbling of the centers continues and drying gas is applied through the pan. Due to the removal of water with the drying gas and subsequent crystallization of the sugar, the liquid syrup on the centers concentrates in solid content and becomes hard, forming a solid sugar layer. Such an application of syrup followed by drying/hardening of the syrup into a hard sugar layer is collectively referred to as a "shot cycle". Many of these shot cycles are typically performed - each time adding an additional hard sugar layer to the centers - in order to achieve the desired thickness, coverage, and quality for the hard sugar coating.

Because the coating and hardening steps in the shot cycle can take a significant amount of time, and the shot cycle is usually repeated many times, the panning processes can require considerable time and energy. Moreover, if it is desired that the hard sugar coating be colored, large volumes of color additives are typically needed. Conventionally, color is imparted to the hard sugar coating via inclusion of one or more color additives in the syrup(s) used during the panning process. The color additives can be admixed with the syrup before it is poured onto the centers tumbling in the pan. In order to achieve a consistent color, true to the desired shade or hue, as well as complete coverage of the confection, the color additive is included in the syrup of multiple successive shot cycles. The use of color additives in multiple shot cycles results in the large volume of color additives used. This large volume of additives can add noticeably to the cost of coating the centers.

Film forming processes have been used in the pharmaceutical industry to apply polymeric films as an outer layer on a panned pill or tablet. However, the use of polymeric film formers may not be desirable on confections, which are intended to be chewed prior to ingestion. Mastication of a polymeric film can release the film former into the mouth, where the film former will coat the tongue, teeth, and other surfaces with which it comes in contact, leading to an unpleasant consuming experience.

A process for providing a hard sugar coating on a confection that takes less time and/or requires less color additive would thus be highly desirable. Such a process would desirably be free of components that would deleteriously impact the consuming experience, such as film formers.

WO 01/11984 provides a continuous coating process for chewing and bubble gums where small cores or pieces of gum material are introduced into inclined rotating drums in which heated air is circulated and a coating solution is applied, where the coating material is dried on the pieces of material and a plurality of thin layers are formed on each or the cores or small pieces of material; BE 729 406 discloses a method for continuous coating with sugar or lacquer using a coating agent and a specially designed coating apparatus, which enables coating to be carried out in a continuous manner instead of in several batch processes; EP 2702875 relates to methods to prepare isomaltulose-containing comestibles with a chocolate core and the products obtained thereby.; US 2006/0034975 relates to a chewing gum coated with at least one layer, the layer comprising slightly water-soluble calcium salt and/or a composite thereof; WO 2014/150438 relates to a hard-panned coating and a hard-panned confection comprising an edible core coated with the same; WO 2014/152120 relates to confectionery coatings comprising sucrose esters, coated confectionery products and methods of manufacturing the same; DE3302589 provides a process and apparatus for coating particles, particularly particles of medicinal drugs; and EP3072402 discloses an edible coating comprising rhodoxanthin which has a red value a* of at least 36 at the CIELAB color scale.

### BRIEF DESCRIPTION

The present invention is defined by the appended claims.

Confections and other coated materials are provided to include a center with a hard shell surrounding the center. The hard shell includes one or more first sugar layers, and optionally a colored layer over the one or more first sugar layers. The present invention provides an improved method of applying a sugar film coat to centers, which method having a coating cycle to impart a coated layer to produce sugar film coated centers. The coating cycle includes the steps of a) intermixing the centers in a coating vessel; b) applying drying gas through the coating vessel, wherein the drying gas provides a drying rate of moisture removal in the coating vessel; c) spraying a wet sugar syrup at a spraying rate, in an atomized state, onto the centers while intermixing the centers and applying the drying gas around the centers in the coating vessel to produce a wet coated centers having a wet coat, wherein the sugar syrup comprises a crystallizing sugar, and wherein the spraying rate provides a moisture addition rate higher than the drying rate in the coating vessel; and d) after forming the wet coated center, reducing the spraying rate or stopping the spraying of the wet sugar syrup, while applying the drying gas, to allow the moisture addition rate to be slower than the drying rate in the coating vessel, whereby the wet coated centers lose their moisture to form the sugar film coated center, wherein the method further comprises a step of repeating one or more of the coating cycles with a wet sugar syrup further comprising a colorant, and wherein the sugar film coating is free of a polymeric film former. There is additionally provided an improved method of applying a sugar coating to centers. The improved method having a coating cycle that has the steps of a) intermixing the centers in a coating vessel, b) applying drying gas around the centers, wherein the drying gas provides a drying rate of moisture in the coating vessel, and c) spraying a wet sugar syrup at a spraying rate, in an atomized state, onto the centers while intermixing the centers and while applying the drying gas around the centers to produce covered centers covered with a base sugar coat, wherein the sugar syrup comprises a crystallizing sugar, and wherein the spraying rate provides a moisture addition rate slower than the drying rate of moisture removal in the coating vessel, wherein the covered centers are further coated with an outer coat layer using an outer coating method. The outer coating method has the steps of i) intermixing the covered centers in a second coating vessel; ii) applying second drying gas through the second coating vessel, wherein the drying gas provides a second drying rate of moisture removal in the second coating vessel; iii) spraying the wet sugar syrup at the second spraying rate, in an atomized state, onto the covered centers while intermixing the covered centers and applying the drying gas around the covered centers to produce a wet coated center having a wet coat layer, wherein the second spraying rate provides a second moisture addition rate higher than the second drying rate in the coating vessel; and iv) after forming the wet coated center, reducing the second spraying rate or stopping the spraying of the wet sugar syrup, while applying the second drying gas, to allow the second moisture addition rate to be slower than the second drying rate of moisture removal in the second coating vessel, whereby the wet coat layer loses its moisture.

The method of the present invention is used to produce a sugar film/shell coated product. The sugar shell coated confectionery product has a confectionery center, a sugar shell layer, a transitional layer and a colored layer, wherein the colored layer has a colorant, wherein the colored layer is adjacent to the transitional layer that is adjacent to the sugar shell layer, and wherein the transitional layer has a thickness less than 15 µm, and wherein the sugar shell coating is free of a polymer film former. The sugar shell coated confectionery product can be characterized to have a confectionery center and a hard sugar shell layer, wherein the hard sugar shell layer has an outer colored sugar layer and an inner sugar layer, wherein the colored sugar layer has a colorant and a crystallized sugar, wherein the hard sugar layer has a hard layer thickness and the colored sugar layer has a colored layer thickness, and wherein the hard sugar layer has a ratio of the colored layer thickness over the hard sugar layer thickness of from 0.1 to 0.4.

The sugar layer coating method of the present invention provides a significantly faster coating process to produce a coated center having an equivalent coating thickness produced with a conventional hard sugar panning process. The present process deposits the atomized sugar solution that is partially dried while traveling from the atomizing nozzle to the center before the sugar solution is deposited and coated on the center. Accordingly, there is less moisture that needs to be removed from the coated center. Surprisingly, it has been found that the removal of the moisture from the sprayed sugar solution does not adversely impact the coating qualities, such as, uniform coverage, smoothness and thickness, and finished gloss, of the coated center. Moreover, the lowered moisture content of the coating sugar solution that is successively deposited on previously deposited sugar layer forms a clean interface that does not cause the top portion of the previous layer to be significantly dissolved and intermixed with the contents of the newly deposited sugar layer. The reduced dissolution and intermixing on the interface of the two layers ensures that the contents of the later applied layer does not diffused into the previously applied layer. The reduced or no dissolution of the interface is highly desirable. For example, when a colored sugar layer is applied on a non-colored or different colored sugar layer, there is no significant loss of the colorant from the upper layer to the lower layer, providing distinct colored layers and minimizing the loss of the colorant dissipating into the lower layer. The present method is a more efficient and faster production process that produces finished and dried smooth sugar coated centers, such as confectionery centers.

### BRIEF DESCRIPTION OF THE DRAWINGS

Implementations of the disclosure may be better understood when consideration is given to the following detailed description. Such description makes reference to the following figures wherein:
Figure 1 is a photograph taken under magnification of a cross-section of a conventional confection having a colored portion of a hard sugar shell applied with a conventional panning process;
Figure 2 is a photograph taken under magnification of a cross-section of one embodiment of a confection having a colored portion of a hard sugar shell applied according to one embodiment of the method;
Figure 3 is a flow diagram of one embodiment of a method of producing a sugar coating on a plurality of centers;
Figure 4 is a flow diagram of one embodiment of a method of producing a sugar coating on a plurality of centers;
Figure 5 is a diagram showing one shot cycle of one embodiment of the method; and
Figure 6 is a graphical representation of some process parameters suitable for use in one embodiment of the method.

### DETAILED DESCRIPTION

The terms "first", "second", and the like, as used herein do not denote any order, quantity, or importance, but rather are used to distinguish one element from another. Also, the terms "a" and "an" do not denote a limitation of quantity, but rather denote the presence of at least one of the referenced items, and the terms "front", "back", "bottom", and/or "top", unless otherwise noted, are merely used for convenience of description, and are not limited to any one position or spatial orientation.

Reference throughout the specification to "one example" or "an example" means that a particular feature, structure, or characteristic described in connection with an example is included in at least one embodiment. Thus, the appearance of the phrases "in one example" or "in an example" in various places throughout the specification is not necessarily referring to the same embodiment. Further, the particular features, structures or characteristics may be combined in any suitable manner in one or more embodiments.

As used herein, the phrase "film former" means a polymer used in the formation of a film, including, but not limited to, agar, alginate, carrageenan, cellulose derivatives (e.g., HPMC), gums, pectin, starch, and protein-based films (e.g., gelatin and whey proteins).

As used herein the term "chocolate" includes compositions that conform to the U.S. Standards Of Identity for a chocolate (SOI chocolate). The standards of identify for different kinds of chocolate are found in Title 21, Part 163 of the Code of Federal Regulations. The term "chocolate-like composition" refers to non-SOI chocolates which include those in which at least one of the standard ingredients of chocolate (i.e., one or more of the nutritive carbohydrate sweetener, the cocoa butter, and the milk fat) are replaced partially or completely. Non-SOI chocolates also include those in which components that have flavors that imitate milk, butter, or chocolate are used, and those in which other additions or deletions in the formulation are made that are outside the FDA standards of identity of chocolate.

The term "chocolate" includes dark chocolate, baking chocolate, milk chocolate, sweet chocolate, semi-sweet chocolate, buttermilk chocolate, skim milk chocolate, mixed dairy chocolate, low fat chocolate, white chocolate, aerated chocolates, compound coatings, and chocolate-like compositions, unless specifically identified otherwise. The term "chocolate" also includes crumb solids or solids fully or partially made by a crumb process. In addition, the terms sugar solution, sugar syrup and sugar syrup solution are interchangeably herein.

The term "crystallizing sugar" as used herein includes one or more of a crystallizable sugar, such as sucrose, glucose or other crystallizing sugar, and a crystallizable polyol, such as xylitol, sorbitol, maltitol, isomalt, mannitol or a mixture thereof.

The methods described herein may be applied to full fat or reduced fat chocolate. The term "fat" as used herein, refers to triglycerides typically used in confections, especially confectionery products and chocolate products. Fats useful in the methods described herein include the naturally occurring fats and oils such as cocoa butter, pressed cocoa butter, expelled cocoa butter, solvent extracted coco butter, refined cocoa butter, milk fat, anhydrous milk fat, fractionated milk fat, milk fat replacers, butterfat, fractionated butterfat, and vegetable fat, as well as other modifications of these fats, including but not limited to cocoa butter equivalents (CBE), cocoa butter substitutes (CBS), cocoa butter replacers (CBR), anti-blooming agents, such as behenoyl oleoyl behenate (BOB), reduced calorie fats and/or synthetically modified fats, including reduced calorie fats and non-caloric fat substitutes.

A reduced calorie fat is a fat having all the properties of typical fat but having fewer calories than typical fat. A non-caloric fat substitute, e.g., a sucrose polyester, likewise processes all the typical fat characteristics, but is not absorbed after ingestion and thus is not metabolized. A "full-fat" chocolate has a total fat content greater than 25% by weight and typically, a total fat content of from 25% to 35% by weight. On the other hand, a "reduced-fat" chocolate has a total fat content less than 25% by weight.

There is provided a method of applying a sugar film coating on a center, such as a confection center. The method involves applying a sugar layer to a center by atomized spraying of a sugar syrup or sugar syrup solution. A suitable sugar syrup contains a crystallizing sugar and water, which may also contain other additives, such as a colorant. Conventionally, in order to spray on a syrup in an atomized state, a film former would be needed to enable the layer to harden properly. The spraying parameters used herein, however, enable a syrup to harden into a layer having the desired characteristics without the use of a film former. In the present invention, the sugar film coating of the present invention is free of a polymeric film former, such as a hydrocolloid or gum. Additionally, atomized spraying of the present invention, instead of pouring, dripping or coarse spraying (e.g., using a hydraulic nozzle) of a sugar syrup onto confection centers in a pan of conventional hard sugar panning processes, of the sugar syrup into the pan allows the syrup to dry quicker, such that using the panning method described herein can save time and coat as compared to conventional methods. Furthermore, it has been found surprisingly that the atomized spraying method does not form amorphous sugar layers. The present atomized spraying process also does not require the centers to be intermixed or tumbled for an extended period of time in the coating pan to uniformly distribute and coat the syrup on the centers. The present process applies the atomized sugar solution spray onto the centers while simultaneously applying the drying gas around the tumbling centers, unlike the conventional hard sugar panning process that sequentially applies the sugar solution and the dry gas. It is believed that the present method partially dries the atomized droplets of the sugar solution as the solution leaves the atomizer nozzle and moves on to the tumbling centers to be deposited thereon, thereby reducing the amount of moisture that needs to be removed from the coated centers and thus reducing the drying time. Unlike conventional panning processes, the present method coats the centers by directly depositing and evenly coating the atomized droplets of the sugar syrup solution onto the centers. The present method is a fast drying process that does not sacrifice the aesthetically desirable finish, e.g., smooth coated surface.

Additionally, the methods described herein are applicable to a wider variety of shapes than conventional panning processes, which rely on piece-to-piece contact to distribute the sugar syrup among a plurality of centers. Instead, the present methods distribute colored sugar solutions to a plurality of centers via atomized spraying, rather than pouring a colored solution into a pan and onto the tumbling centers. As a result, the present process that relies on the directly application of the colored solution onto the surfaces of the centers with atomized coating solution, in addition to partially drying the atomized droplets of the solution, directly and evenly coats the centers. As such, even irregularly shaped surfaces of the center (e.g., concave or convex surface geometries) that may not come into contact with other surfaces of the centers while tumbling are coated more readily and evenly using the present method. For example, heart shaped centers, or other shapes having an irregular shape, can be fully and evenly coated using the present method. The cleft of a heart shaped center or depression of an irregularly shaped center receives an equivalent amount of colored droplets compared to the more exposed surface of the center. In contrast, the conventional contact application/spreading process tends to over or under apply the coating syrup on the irregularly shaped surface of the center, e.g., over-filling and bridging the cleft to form a triangular shape. Although the present method is illustrated herein with a colored sugar solution, the same coating mechanism is applicable for aesthetic and/or protective coatings of a sugar solution.

Moreover, the atomized spraying of the sugar syrup coating solution discussed herein can enable 50% or more of sugar syrup application per shot cycle than conventional panning processes. This increased mass of syrup per shot cycle is enabled since a portion of moisture in the applied syrup is removed from the atomized droplets while traveling on to the surface of the centers from the atomizer spray nozzle. The syrup solution applied during such a partially dried stage does not add as much moisture on the centers, and at the same time, when the syrup solution reaches and coats the center, moisture from the coated syrup on the centers starts to evaporate. Thus, more syrup can be applied before the surface of the centers become over saturated with moisture, compared to conventional panning processes of quickly pouring, coarse spraying or dripping a sugar syrup and intermixing or tumbling the wet centers to distribute the applied syrup to coat the centers.

The methods described herein can also be used to apply colored solutions to the desired centers, and such embodiments provide further advantages as compared to conventional panning processes. That is, conventional panning processes wherein colored layers are deposited typically include applying many layers of syrup having the desired color additive in order for the desired finished color quality to be achieved. Conventional hard sugar penning processes apply a wet colored syrup on the centers and tumble the centers in a coating pan until the applied syrup is evenly distributed and uniformly coated on the underlying sugar coated surface of the centers. Subsequently, the wet coated centers are dried by applying drying gas. The applied wet syrup during the extended distributing and wet coating step softens and dissolves a significant portion of the underlying sugar layer that was applied in a previous coating cycle. As a result, some portions of the colorant from the newly applied colored syrup migrates or diffuse into the dissolved underlying layer, which likely has a different color or hue, e.g., white or opaque, thereby diluting the color effect of the colored additive. Additionally, the contents of the dissolved layer migrate or diffuse into the newly applied colored syrup, diluting the color additive concentration in the newly applied layer. Given the diluting effect of applying the wet syrup, the colored coating application cycle must be repeated several times until a desired color or hue is achieved. This multi-cycle colored syrup application process results in an overall thicker colored layer in conventional panning processes.

In contrast, the methods described herein enable a colored layer to be applied directly to the center with fewer applications of colored coating layers. The present method applies partially dried atomized colored sugar syrup onto the center to form a colored coating layer, thereby minimizing the underlying sugar layer that receives the colored sugar syrup from being dissolved, and minimizing the loss of the colorant contained in the colored coating layer by eliminating or minimizing the migration or diffusion of the colorant into the underlying sugar layer. The dissolving and intermixing in and near the interface between the underlying layer and the newly applied layer form the transitional layer, which has a diluted and interdispersed components of the two underlying and newly applied layers. Thus, fewer syrup applications (shot cycles) are needed in order to achieve the desired color, and cost savings and manufacturing efficiencies are provided. In addition, the partially dried state of the applied atomized sugar syrup allows significantly higher amounts of sugar syrup can be applied onto the center without making the center saturated with the wet syrup.

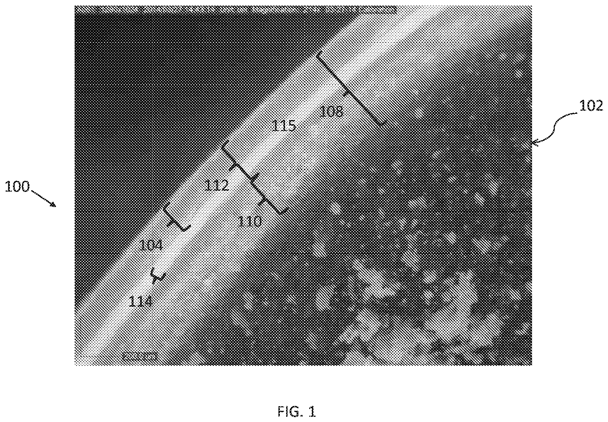

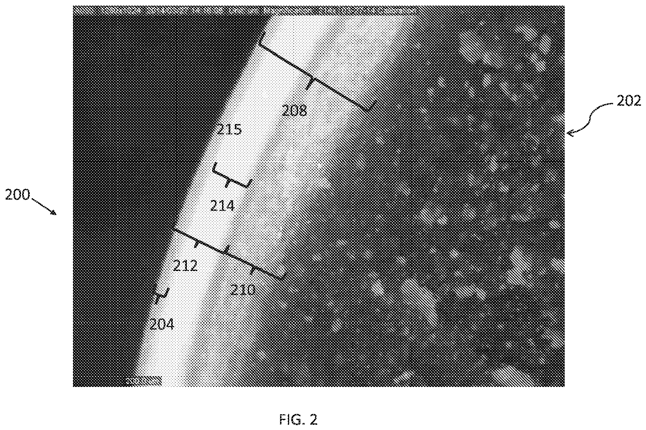

This advantage of the present method can be seen by comparing Figures 1 and 2. Figure 1 is a cross-sectional view of a conventionally produced confection 100 including a chocolate center 102 having a sugar shell 108 coated thereon, the sugar shell 108 having been applied via a conventional panning process. The sugar shell 108 includes a plurality of conventionally applied sugar layers, including an uncolored or opaque base sugar layers 110 proximate the center 102 and a finishing hard sugar layers 112 on top of the base sugar layers 110. The base sugar layer 110 is an optional layer, which provides a bulk and thickness to the overall coating, and the base sugar layer 110 is typically formed by a conventional process. The hard sugar layer 112 has an outer colored layer 104 over a white, opaque or uncolored sugar layer (opaque sugar layer) 114, which is applied over the center 102 or the base sugar layer 110 if a base sugar layer is used. Between the outer colored layer 104 and the opaque sugar layer 114, there is a transitional layer 115. The opaque sugar layer 114, the transitional layer 115, and the colored layer 104, along with the optional base sugar layer 110, form a sugar shell 108. To provide a good quality color, the opaque sugar layer 114 of the hard sugar layer 112 may include a white color additive or uncolored. Once the opaque sugar layer 114 is formed, the colored layer 104 is applied. The sugar syrup solution for each of the layers typically uses a common base syrup solution, which contains a crystallizing sugar and water. The sugar syrup solution forming the colored layer 104 include one or more color additives or colorants of the desired color in the common base syrup solution. It is to be noted that each of the layers in the sugar shell 108 is formed, until a desired coating thickness is achieved, by repeating a coating cycle having the steps of a) a wet syrup application onto confectionery centers by pouring a sugar syrup solution onto the centers while they are being intermixed in a coating pan to spread the sugar syrup solution and coat the centers, and then b) applying a drying gas to dry the coated sugar syrup. Typically, the base sugar layer 110 can have a thickness between 170 µm and 400 µm, and the hard sugar layer 112 can have a thickness between 170 µm and 400 µm. In general, the hard sugar layer 112 includes an outer colored layer having a thickness of 150 µm and 300 µm. As can be seen from Figure 1, the colored layer 104 is more than 50% of the thickness of the hard sugar layer 112.

In conventional hard sugar panning process, each of the base layer 110 and the finishing hard sugar layers 112 are applied using a panning method in which a syrup solution is poured into a pan containing centers. Since application of the syrup solution results in some dissolution of background layers, such as the opaque sugar layer 114, the colorants in the colored layer 104 is diffused and becomes diluted, and a large number of the colored sugar application cycle has to be applied to form the colored layer 104. The interface between the colored layers 104 and the opaque sugar layers 114 forms a transitional layer 115, which is formed as the contents, including the colorants, are migrated or diffused between the two layers, for example, when a wet sugar solution of the colored layer 104 is applied onto the upper layer of the opaque sugar layer 114. The wet sugar solution dissolves the upper layer of the opaque sugar layer 114 and intermixes the contents of the two layers, forming a transitional layer having a diluted content, e.g., colorant, concentration. The thickness of the transitional layer 115 can vary depending on various factors, including the water content of the applied sugar solution, the duration of tumbling distribution of the colored syrup and the drying speed provided by the coating vessel. The thickness of the transitional layer 115 may be thicker than about 40 µm, for example 50 µm, 60 µm or 70 µm.

Turning now to Figure 2, there is provided an exemplary depiction of a coated chocolate center produced in accordance with the method of the present invention. A cross-sectional view of a confection 200 having a colored sugar shell applied via the present method is shown. As shown, confection 200 includes center 202 and sugar shell 208. The sugar shell 208 includes a plurality of sugar layers. More particularly, the sugar shell 208 includes an uncolored or opaque base sugar layer 210 proximate the center 202 and a finishing hard sugar layer 212 on top of the base sugar layer 210. Although the base sugar layer 210 is an optional layer, the base sugar layer 210 can act as a barrier around the center 202 and, for example, can be applied at a lower temperature to prevent or reduce dissolving/melting of the center 202. The sugar syrup solution for each of the layers uses a common base sugar syrup solution, which contains a crystallizing sugar and water. The sugar syrup solution forming the colored layer 204 include one or more color additives or colorants of the desired color in the common base syrup solution. Similarly, the sugar syrup solution for the opaque sugar layer can be the common base syrup solution, which optionally contains a white colorant or pigment. An exemplary process for applying the base sugar layer 210 is a conventional process. The base sugar layer 210 can have a thickness between 170 µm and 400 µm, and the hard sugar layer 212 can have a thickness between 170 µm and 400 µm.

The hard sugar layer 212 includes a colored sugar layer 204 and an opaque sugar layer 214. There may be a transitional layer 215 between the colored sugar layer 204 and the inner opaque sugar layer 214, although a transitional layer is not noticeable in Figure 2. The colored sugar layers 204 of confection 200 are applied using an embodiment of the method described herein. Because the present method results in minimal or no dissolution of underlying the opaque sugar layer 214, no or substantially no dilution of the colored solution occurs, and fewer cycles of colored syrup applications need be applied to achieve an acceptable color to form the colored sugar layer 204. Whereas the colored portion of a sugar shell produced conventionally is typically thicker than 150 µm, the colored portion of a sugar shell produced in accordance with the present method has a thickness of less than 100 µm, less than 75 µm, less than 60 µm, less than 50 µm, or less than 40 µm. In some embodiments, the thickness ratio of the colored layer and the hard sugar layer produced with the present method is between 0.1 and 0.4, desirably between 0.1 and 0.3, more desirably between 0.1 and 0.2, indicating the small shell thickness of the colored layer.

As shown in Figure 1, the colored sugar layer 104 and the opaque sugar layer 114 form a defined interface (i.e., transitional layer 115) that can even be observed with a low magnification of the layers, as shown in Figure 1. Similarly, the colored sugar layer 204 and the opaque sugar layer 214 may form a transitional layer 215, although the transitional layer of the present invention is not noticeable or significantly thinner than that of conventionally produced sugar panned products. The colored sugar layer 204 has a color that is at least 10 Delta E in the CIELAB color space away from the color of the opaque sugar layer 214, with the exception of when the colored layer(s) are white and are applied on top of white background layers. Depending on the color of the colored layer, the colored portion 204 may have a color that is more significantly different than the uncolored opaque sugar layer 214, such as a color that is at least 25 Delta E, or at least 50 Delta E in the CIELAB color space away from the color of the uncolored portion. As can be seen from Figure 2, the transitional layer 215 between the colored sugar layer 204 and the opaque sugar layer 214 within the finishing hard sugar layer 212 is practically unnoticeable, unlike the transitional layer of a sugar pan coated product produced with the conventional hard sugar panning process. The transitional layer created by the present process has a thickness equal to or less than 30 µm, desirably 15 µm, and more desirably 10 µm. In some embodiments, the transitional layer has a thickness equal to or less than 15 µm.

The base sugar layer 210 can be applied using conventional panning methods (e.g., by pouring of the syrup into the pan and tumbling the centers), or can be applied using the present method. If applied using the present method, additional cost and/or time savings may be achieved (as opposed to those embodiments wherein only colored finishing layers are applied using the present method) due to the reduced time and expense of the present method as compared to conventional panning processes.

Uncolored, opaque or white sugar syrups typically include sugar, water, and optionally, whiteners and other additives. Any suitable crystallizing sugar can be included in the syrup used in the present method, such as sucrose or glucose (dextrose). Sugar substitutes may also be used, and suitable examples of these include sorbitol, maltitol, xylitol, isomalt, lactitol, and mixtures thereof. Example whiteners that can be included in the syrup include, but are not limited to titanium dioxide and calcium carbonate.

Colored sugar layers may be the same as the sugar solution for the opaque sugar layer, with the addition of a desired colorant. That is, colored sugar solutions used in conventional panning processes and suitable for use in the present method include one or more sugars or sugar substitutes, water, the desired colorant, and optionally other additives. When the sugar shell is desirably white, titanium dioxide, sucrose esters, calcium carbonate and/or starch may be used.

The weight percent of the color additive to be used in a colored sugar solution depends on whether a synthetic color additive or a natural color additive is used. Typically, lesser amounts of a synthetic color additive are needed to achieve a color than the amount of natural color additive required to achieve the same color. For example, suitable amounts of synthetic color additives used in sugar solutions range from 0.5 to 2 wt %, based upon the total weight of the sugar solution, whereas suitable amounts of natural color additives can range from 2 to 4 wt. %, based upon the total weight of the sugar solution.

Suitable sugar syrup solutions for the present invention contain between about 45% and about 85%, desirably between about 55% and about 80%, by weight, of a crystallizing sugar and about 15% and 50% of water. In some embodiments, a sugar syrup solution containing from about 45% to about 65% of a crystallizing sugar is used. Unlike conventional panning processes, the present method is able to utilize sugar syrup solutions having a sugar solution of low sugar contents without detrimentally impacting the coating quality, such as mottled textures, which may result from excessive water impacting applied sugar layers, and also without requiring long drying requirements. Using a sugar solution of a relatively high water content in the present method provides improved aesthetics, such as smooth surface. Furthermore, a sugar solution containing a low concentration of sugar can be processed without heating, e.g., at room temperature, and such a sugar solution provides a lower risk of inversion of sucrose even at low pH conditions, as well as more adaptable to dissolving other additives, e.g., a higher concentration of colorants. In some embodiments, suitable sugar syrup solutions contain between about 67% and about 76%, by weight, of a crystallizing sugar and about 24% and 33% of water. One suitable syrup, for example, may include 75.5% by weight of sugar, 24% by weight of water, and 0.5% by weight of synthetic color additive. Another suitable syrup may include 62% by weight of sugar, 24% by weight of water, and 14% by weight combined of natural color additive, and whitener. Yet another suitable syrup may include 60% by weight of sugar, 30% by weight of water, and 10% by weight combined of natural color additive, and whitener.

The color additive (whether synthetic or natural) can be a single color additive or can be a combination of color additives (e.g., a blend to achieve a desired color). Any color additive that has been approved for use in food can be used in the colored sugar syrup applied according to the present method. Natural or synthetic color additives may be used. Artificial colors approved for use in food in the US and the European Union (EU designation in parentheses) include FD&C Blue No. 1 (Brilliant Blue FCF E133), FD&C Blue No. 2 (Indigotine E132), FD&C Green No. 3 (Fast Green FCF E143), FD&C Red No. 40 (Allura Red AC E129), FD&C Red No. 3 (Erythrosine E127), FD&C Yellow No. 5 (Tartrazine E102) and FD&C Yellow No. 6 (Sunset Yellow FCF E110). Some additional synthetic color additives approved for use in the European Union include Quinoline Yellow E104, Carmoisine E122, Ponceau 4R E124, Patent Blue V E131 and Green S E142.

Useful food color additives that are often referred to as 'natural' are also known, such as, for example, annatto (E160b), Cochineal (E120), Betanin (E162), Turmeric (curcuminoids, E100), Saffron (carotenoids, E160a), paprika (E160c), Lycopene (E160d), and fruit and vegetable juices. The present method can be particularly advantageous when natural colorants are desirably used in one or more colored layers 204, as lesser colorant is used to achieve an equivalently colored layer of a conventional hard sugar panning process, and natural colorants can be more expensive than synthetic colorants.

Combinations of synthetic and/or natural color additives may be used, i.e., two or more synthetic color additives may be used, one or more natural color additives and one or more synthetic color additives, or two or more natural color additives are suitable.

Color additives are often available for use in food as either dyes or lakes. Dyes are soluble in water, but insoluble in oil, and provide color via dissolution in a food matrix. Lakes, on the other hand, are soluble in neither oil nor water, and provide color via dispersion in a food matrix, such as that provided by the sugar syrup.

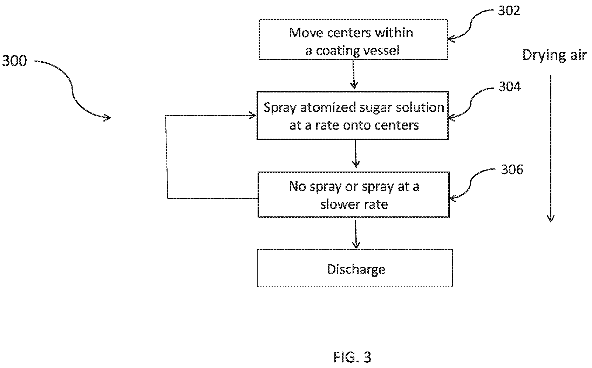

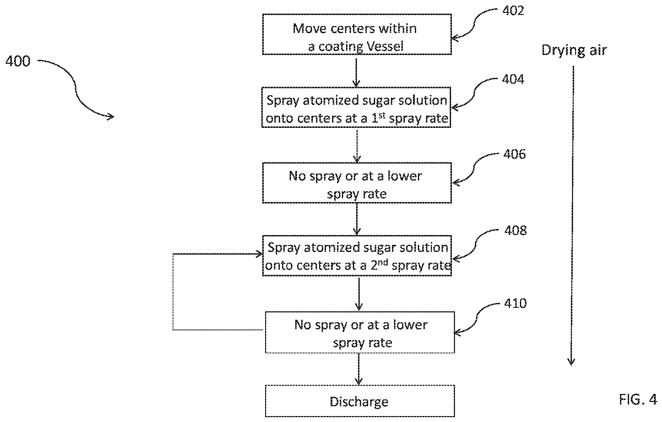

Figure 3 is a flow diagram of one embodiment of the method provided herein. As shown, method 300 includes intermixing or tumbling centers within a coating vessel 302, spraying an atomized solution onto the moving centers at a first spray rate for a first time period, which is a wet coating step 304, and stopping or reducing the spraying rate of the atomized solution application, which is a drying step 306. In accordance of the present invention, during both of the atomized solution spraying wet coating step 304 and the drying step 306, a drying gas is simultaneously introduced into or through the vessel 302 to dry the wet syrup solution applied on the centers. The drying gas is further described below in connection with Figure 4. In some embodiments, the cycle of wet coating step 304 and the drying step 306 is repeated until a desired thickness of the coat on the centers is achieved. In some embodiments, the wet coating step 304 is stopped or the application rate of the coating syrup solution is reduced when the centers receive sufficient amounts of the sugar solution to coat the centers, from which sufficient amounts of moisture is accumulated on the centers to be sufficiently wet, i.e., when wetness can be perceived when touched. It is to be noted that over applying the sugar syrup solution to the extent that the coating solution overly saturates the centers is not desirable since the overly wet centers clump together and hinder the coating process. For example, an overly saturated coating can be characterized as forming in the coating pan while being intermixed or tumbled a multitude of clusters of centers having more than 10 centers each. Once the centers are sufficiently coated with the coating syrup solution, the centers are exposed to the drying step 306 by stopping or reducing the rate of the coating syrup application such that the drying or removal rate of moisture in the vessel and from the wet centers is higher than the introduction rate of moisture in the vessel. The drying step 306 is applied by completely stopping or reducing the application rate of the sugar syrup solution application onto the centers such that the drying rate of moisture is higher than the introduction rate of moisture in the coating vessel and on the centers. In some embodiments, the drying step 306 completely stops the application of the coating sugar syrup solution onto the centers. The drying step 306 is stopped when the centers are sufficiently dried, i.e., the centers are dry to the touch and not sticky. The coating method depicted in Figure 3 and above is referred to herein as the spray-shot method.

More particularly, method 300 begins by providing a plurality of centers in a coating vessel and then intermixing the centers within the vessel 302. A typical coating pan conventionally used in a hard panning process is also suitable for the present method. The centers can be any edible component capable of being sugar panned, including, but not limited to, a chocolate, a chocolate-like composition, peanut butter, a biscuit, a sugar gel, a hard sugar ball, a gum, a nut, a fruit, a seed, a spice, a pharmaceutical, or a combination of any number of these. Such centers may include one or more coatings of material that are already present on the centers at the start of method 300, or may be uncoated. For example, a chocolate core may have one or more initial sugar layers coated thereon by a conventional method prior to introduction to method 300. In another example, a nut may have one or more sealing layers coated thereon prior to introduction of the nut to method 300.

The coating vessel is used to tumble or mix the centers, and can comprise a rotating pan, fluidized bed, or vibrating pan. In examples in which a rotating pan is used, the pan is rotated about an axis to tumble or mix the centers within the pan. In examples in which a fluidized bed is used, gas flow through the centers is used to tumble or mix the centers. The rate of rotation/gas flow/vibration for the coating vessel, the size of the coating vessel, and the quantity of centers therein can be different for different implementations of the present method, and can readily be determined by those skilled in the art. For example, a pan with a perforated or unperforated wall having a size diameter of 16, 24, or 56 inches may be used as the coating vessel or larger perforated pans. Such a pan can hold between 10 and 700 kg of centers. In those embodiments wherein a rotating pan is used, the rate of rotating of the pan can be constant throughout the method 300, for example, the pan may rotate at a rate of between 7 and 20 rpm.

As the centers are intermixed or tumbled within the coating vessel, a sugar syrup solution is sprayed in an atomized state onto the moving centers in the coating vessel. Desirably, the atomized syrup solution has a mean particle diameter between about 20 to about 100 µm. Atomizing of the syrup solution can be accomplished with any suitable atomizer nozzle. In an example, spraying 304 uses a two-fluid nozzle, which atomizes the syrup by causing the interaction of a high velocity gas with the syrup. In an implementation of such an example, the gas is compressed air. Atomizing the syrup results in the syrup contacting the surfaces of the centers primarily via the atomized droplets, rather than by surface-to-surface contact of already coated centers, as is the case in conventional panning processes of sugar solutions. A conventional atomizer nozzle may be suitable for the present method. As discussed above, the present process simultaneously applies the drying air into the vessel or onto the centers while the atomized droplets exit the atomizer nozzle, and travel to and coat the centers. As such the moisture in the droplets are partially dried before they contact and coat the centers. The present process does not rely on the contact distribution of the sugar solution among the intermixing centers to evenly distribute and coat the centers, making the process more efficient by reducing the time required to evenly distribute the coating sugar solution and reducing the amount of moisture that needs to be removed from the coated centers. The process enables a higher volume of the sugar syrup to be applied on the centers.

The temperature of the syrup solution that is applied through the atomizer nozzle may desirably be controlled so that the desired concentration of sugar remains in solution in the syrup, i.e., the temperature of the syrup may desirably be maintained above its saturation temperature. Maintaining the syrup at this temperature aids in creating a smooth sugar layer and reduces clogging of supply pipes. The temperature used is also determined by the thermal degradation properties of the particular sugar and melting point of the centers as well as the thermodynamics of the process. For example, syrups containing less than 67% sucrose are applied with the syrup at a temperature of between 20°C and 70°C, while syrups containing above 76% sucrose are applied with the syrup at a temperature of around 70°C.

An additional embodiment of the present method is shown in Figure 4 and is particularly suitable for providing a finished coating surface having a smooth and polished surface even without an additional polishing step, which method is referred herein as a finished coating method. The finished coating method generally includes moving (i.e., intermixing or tumbling) centers within a first coating vessel 402, spraying a first atomized syrup solution at a first application rate, a first wet coating step 404, onto the centers and drying the wet coated centers by stopping or reducing the spraying rate, a first drying step 406, while simultaneously applying a first drying gas throughout the first wet coating step 404 and the first drying step 406. In the first drying step 406 the amount of moisture removed from the coating vessel and the coated center is higher than the amount of moisture released from the wet coated center and the spray, which may be applied at a reduced rate or discontinued. As discussed above with respect to Figure 3, the first drying step 406 is initiated when the centers are sufficiently coated with the coating sugar solution. The first drying step 406 includes stopping or reducing the application rate of the coating syrup solution of the first wet coating step 404 such that the amount of moisture removed from the coating vessel and the wet coated centers is higher than the amount of moisture introduced by the wet centers and/or the coating syrup solution applied onto the centers. The cycle of the first wet coating step 404 and the first drying step 406 provides a first layer coated center, which is a relatively dry coat, and the cycle can be repeated if a thicker layer is desired. The first layer coated center is then further processed to apply a second layer coat on the first layer coated center, using a second layer coating step. Over the first coated centers, while moving (i.e., intermixing or tumbling) the first layer coated centers within a second coating vessel and while applying a second drying gas, a second atomized syrup solution is applied at a second application rate, a second wet coating step 408, onto the centers sufficiently to coat the centers to produce second wet coated centers. The second wet coated centers are then dried with a second drying step 410. The spray-shot method illustrated above with Figure 3 can be sued as the second layer coating step. The second layer coating step can be one coating cycle of the second wet coating step 408 and a second drying step 410, or a multitude of the coating cycle. During both of the second wet coating step 408 and the second drying step 410, the drying gas is simultaneously applied. One of the major differences between the first layer coating step and the second layer coating steps of the finished coating process is that the drying rate of moisture in the first layer coating step is always higher than the introduction rate of moisture throughout the first coating step. In contrast, the drying rate of moisture in the second layer coating step changes over the second coating step, and is lower (wet coating step 408) and then becomes higher (drying step 410) than the introduction rate of moisture. The finished coating method is also suitable for the outer layer of the coated center, including a coating method for a colored outer layer.

The materials and processes used for the first and second steps of the finished coating process, including the coating vessels, coating sugar syrup solutions, solution application spray rates, drying gases, and drying gas application rates, can be equivalent or different for the first and second steps. For example, the coating vessels for the first and second steps can be one vessel or two separate vessels. In certain embodiments of the present invention, one coating sugar syrup solution is throughout the coating processes of the method. In these embodiments, one base solution of a crystallizing sugar syrup is used throughout the processes, although minor amounts of an additive can be added for different layers. For example, a colorant, such as a pigment, dye or opacifying agent, can be added to the base solution. In an exemplary embodiment, the coating method uses one base solution of a crystallizing sugar or sugar syrup is used throughout the processes with a limited modification of adding a colorant for different layers of the coat.

The particular flow rate, temperature, and humidity of the drying gas can be controlled in order to achieve a desired drying rate, as may depend on the total mass of the plurality of centers to be dried and/or the type of coating vessel used. The drying gas can, for example, have a relative humidity of between 0 and 50% and/or a flow rate in the range of about 1 to about 5 cubic feet per minute per kg of centers.

The temperature of the drying gas may suitably depend upon the thermal stability of the center to be coated. For example, for centers that will not readily melt or otherwise degrade at such temperatures, the drying gas temperature can be from about 20° C to about 85° C. If the centers have a low melting point or otherwise degrade or deform at such temperatures, the drying gas can have a temperature of less than 35° C. For example, in those embodiments wherein the centers comprise peanut butter, chocolate or a chocolate-like composition, the drying gas can have a temperature in the range of 20 to 35° C.

The present invention, illustrated for example in Figures 3 and 4, enables a sugar layer having the desired characteristics to be created with the use of a crystallizing syrup that does not include a film former. Such a sugar layer can be created by atomized spraying of the syrup. As described herein, the rate of syrup application during the atomized spraying along with the duration and timing of one or more spraying periods can be set or adjusted in situ in order to achieve a hard sugar layer having the desired characteristics, e.g., smooth coated surface without mottling, on the plurality of centers in the coating vessel.

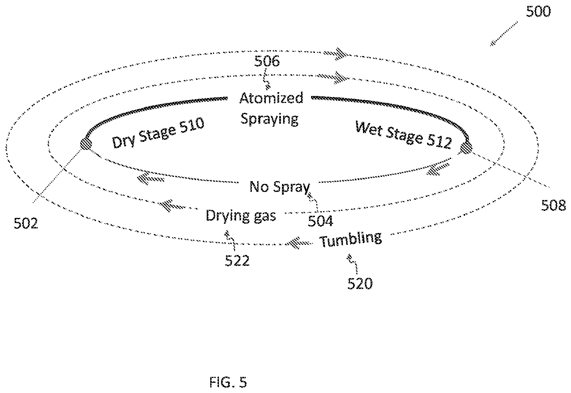

Figure 5 is another illustration of the spray-shot embodiments of the method. As shown, each cycle of method 500 includes a dry stage 510 and a wet stage 512 of atomized spraying 506, and non-spraying or reduced spraying period 504 during which the sugar solution is not sprayed or sprayed at a slower rate such that the drying of moisture is faster than the introduction of moisture from the spray or the wet coat, drying the applied coating of the syrup.

Tumbling of the centers 520 can occur intermittently or continuously throughout method 500. Further, a flow of drying gas 522 is maintained through or into a pan (i.e., a coating vessel) around the centers continuously throughout method 500. The continuous application of the drying gas does not have to be at one continuous rate, for example, a cycle of high and low, or on or off. Desirably, the drying gas is on at least 80%, more desirably at least 90%, of the spraying and drying periods.

Desirably, the surfaces of the centers are dry at the start 502 of method 500. That is, if a previous sugar layer has been applied, the previous sugar layer ideally has been dried to a level that is dry to the touch at the start of atomized spraying 506. When the coated product is fully dried, the moisture content of the coating is less than 3% and a crystallinity of greater than 60%.

The application of syrup during the one or more periods of atomized spraying 506 can be continuous or intermittent. The spraying 506 results in two stages of accumulation on the centers - a dry stage 510 of accumulation followed by a wet stage 512 of accumulation. During the dry stage 510, the droplets of syrup from the atomized spray solidify/dry quickly (e.g., nearly instantly) upon contact with the surface of the centers given that the droplets travel from the atomizer nozzle to the centers while being dried with the drying gas 522. In addition, the underlying layer of previously applied sugar layer(s) can absorb some amounts of moisture from the newly applied coating layer since the new layer does not contain an overly saturating concentration of water. This is referred to herein as "dry accumulation". Thus, little or no spreading of the syrup across or between the centers occurs during the dry stage 510. The dry stage 510 allows solid/crystallized sugar to accumulate on the surfaces of the centers without significant dissolving or having other effect on the layer or other substance making up the surface of the centers upon which the droplets of syrup are sprayed. Additionally, the dry stage 510 provides a base of solid/crystallized sugar, which isolates the underlying layer/substance of the centers' surfaces from the wet stage 512. It is also believed that the base of solid/crystallized sugar aids in the drying of the syrup that accumulates on the surfaces of the centers during the wet stage 512, by absorbing moisture from that syrup. Accordingly, the interface between the previously applied sugar layer and newly applied sugar layer does not or substantially does not form a transitional layer, which is formed in a conventional panning process. The transitional layer in a conventional panning process is formed when the previously applied sugar layer is softened and dissolved by the high water-content of the newly applied sugar layer while being tumbled for an extended period of time to evenly distribute and coat the centers.

The wet stage 512 is after the dry stage 510 and is a period in which the moisture from the droplets from the atomized spray accumulates on the centers. This is referred to herein as "wet accumulation". Although spreading of the syrup across and between the centers may occur during the wet stage 512, such spreading is not relied upon as the primary mode of distribution of the sugar syrup across the surfaces of the centers. The wet accumulation helps to provide the smooth coat finish of the coated products of the present invention.

The moist syrup on the centers accumulates gradually over time during the wet stage 512. Thus, the transition from the dry stage 510 to the wet stage 512 may occur gradually over a time period during the atomized spraying 506 in which the moisture content of the syrup on the centers increases and the crystallinity of the syrup on the centers may decrease.

For example, the dry stage 510 is a period atomized spraying 506 in which the syrup, after being sprayed onto the centers, is present on the surfaces of the centers with a moisture content of between 3-5% and a crystallinity between 10% and 50%. The wet stage 512 would correspondingly be that period during atomized spraying 306 in which the syrup, after being sprayed onto the centers, is present on the surfaces of the centers with a moisture content greater than 5%.

During the dry stage 510, the syrup accumulates on the surfaces of the centers into a sub-layer that may have a rough, orange peel like texture. The wet stage 512, however, provides an accumulation of syrup in liquid form that can both fill in the low spots from the dry stage sub-layer and dissolve some of the high spots from the dry stage sub-layer. Thus, the resulting sugar layer formed after the combination of dry stage 510 and wet stage 512 can have an acceptable smooth surface and finish desired.

The combination of a dry stage 510 followed by a wet stage 512 during the one or more periods of atomized spraying 506, desirably provides a sugar layer a suitably smooth surface, with even color, without the use of a film former. An acceptable surface roughness of the dried/solidified/crystallized sugar layer is less than 0.5 µm, or less than 0.4 µm, or less than 0.3 µm, or less than 0.2 µm.

The spraying parameters for the atomized spraying 506 are set or adjusted *in situ* in conjunction with the other process parameters (e.g., flow rate of drying gas, etc.) to achieve the desired sugar layer characteristics. The spraying parameters include the rate of syrup application and the length of time for the syrup application. Desirably, each spray rate time period may be at least one minute and can last up to 30 minutes. In some embodiments, each spray rate time period can last from one to 30 minutes.

As an illustration, suitable spray rates for a 10 kg batch of the centers may range from 10 ml/min to 50 ml/min, or from 15 ml/min to 45 ml/min, or from 20 ml/min to 30 ml/min with a suitable drying gas rate. The spray rate may be higher in a large scale production setup. One spray rate may be held for a certain amount of time, the spray rate adjusted to a second rate, which may then be held for a certain amount of time, i.e., the rate of spray of the sugar solution may be increased in a step-wise fashion. For example, an atomized sugar solution may be sprayed on coated or uncoated centers at a rate of 15 ml/min for a time period of from 1 to 20 minutes, or from 2 to 15 minutes or from 3 to 10 minutes, or for about 4 to 8 minutes. The rate of spray may then be increased to 18 ml/min and the centers spray with the atomized sugar solution at this rate for the same, or a different time period, from 1 to 20 minutes. A shot cycle may also include periods of decreased rates of spray, i.e., a spray rate of 34 ml/min may be employed for 4-10 minutes, followed by a spray rate of 32 ml/min for 1 to 20 minutes.

At the end of one or multiple spray rate periods, the spray of syrup may be halted or applied at a slower rate. In such embodiments, this would mark the beginning of a non-spraying or low speed spraying period 508 the beginning of the non- or low-spraying period which, the centers are coated with an accumulation of syrup in liquid form from the wet stage 512 of the last spray period. The movement of the centers may be maintained at either a constant or varied rate throughout method 500.

Drying gas can be passed through or into the pan during any or all portions of method 500 to dry the syrup onto the centers. The drying gas can be applied continuously or in cycles, and at a constant or varied rate, throughout all or substantially all of method 500. The drying gas is desirably applied at a rate that allows the syrup to form smooth surface on the centers and until the evenly spread sugar syrup dries/solidifies/crystallizes, forming a sugar layer on each of the centers. At the end each cycle of method 500, the sugar layer formed by each cycle may have an average thickness in the range of 5 to 30 µm or from 10 to 20 µm.

The crystallizing syrup may be sprayed at the same rate during the wet and dry stages of accumulation, or may be applied at one or more rates during one or more dry stages of accumulation and one or more rates during one or more wet stages of accumulation. Generally speaking, the average rate of syrup application may be lower during the dry stage of accumulation than the wet stage of accumulation. If the spray rate changes during the dry or wet stages of accumulation, the same may occur in a step wise, or linear fashion.

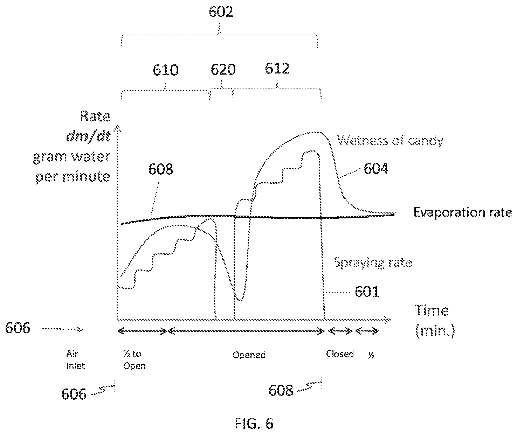

Figure 6 is a graph of various parameters during another embodiment of the finished coating method of the present method. Figure 6 shows both a rate of water application and a spray rate 601. A given rate of syrup application is proportional to a rate of water application therefrom based on the percentage by weight of the syrup that is water. The rate of syrup application (proportional to 601) is adjusted in situ during the one or more periods of atomizing spraying. Adjustment to the spray rate can provide a more gradual accumulation during the dry stage 610, a more gradual transition from dry accumulation to wet accumulation, and can help ensure sufficient wet accumulation towards the end of the wet stage 612.

More particularly, syrup may desirably be applied at a first one or more rates during the dry stage 610 and a second one or more rates during the wet stage 612, wherein the first one or more rates are on average lower than the second one or more rates. Using lower rate(s) during the dry stage 610 helps to ensure the accumulation during this stage is sufficiently dry. Similarly, using higher rate(s) during the wet stage 612 helps to smooth the surface and to ensure the accumulation during this stage is sufficiently wet. As shown in Figure 6, the rate of syrup application is increased in a step-wise fashion during both dry and wet accumulation. Figure 6 also shows a non-spray period 620, during which no syrup is sprayed.

The moisture level at which the accumulation transitions from dry accumulation to wet accumulation is when the rate of water application 601 from the syrup rises above the maximum evaporation or drying rate 608. The maximum evaporation rate 608 is the maximum amount of water that can be removed from the pan by the flow of drying gas 606. Near the beginning 606 of the one or more spray periods 610, the rate of moisture introduced by the atomized syrup application (water application) 601 is substantially lower than the maximum evaporation rate 608. This results in the dry accumulation of syrup discussed above, since almost all of the moisture in the applied syrup is quickly removed. Around the time when the rate of water application 601 rises above the max evaporation rate 608, the accumulation begins to transition to wet accumulation as spraying applies more water than can be removed by the flow of drying gas 606, and little water is being absorbed by the surfaces of the previously coated layers of the centers. In an example, the rate of water application 601 is maintained below the max evaporation rate 608 during the dry stage 610 and maintained above the max evaporation rate 608 during the wet stage 612. The phrases "max evaporation rate" and "drying capacity" may be used interchangeably herein. And so, as can be seen, moisture is applied to the system during the method at rates both above and below the rate at which moisture is being removed.

The flow rate of drying gas may be adjusted during implementation of embodiments of the method. In one embodiment, the drying gas may be passed through at a lower rate during a first portion of the drying step and at a faster rate during a second portion of the drying stage. The flow rate of drying gas during the beginning portion of the dry stage 610, however, can be maintained at a level such that the substantially all of the applied water that is not absorbed into the underlying surface of the centers is removed by the drying gas.

The present invention is further illustrated with the following example.

### Example

A 24-inch tulip pan is used to coat a plurality of centers according to one embodiment of the method. A 24-inch tulip pan is used and the centers have a composition of chocolate with multiple sugar layers on the outside of the chocolate. 10 kg of centers are tumbled in the pan. A flow rate of 200 cfm (cubic feet/min) drying air is introduced into the pan. The drying air is at a temperature of 25°C and a humidity of 2g water/kg dry air. The centers are tumbled in the pan at a constant rate of 20 rpm throughout the shot cycle 200.

The syrup is a 76 Brix syrup consisting of water, sugar, and a color additive for the color orange. The rate of syrup application is shown in Table below, wherein the rate of syrup application is held at the rate listed from the time listed in its row until the time listed in the subsequent row. Thus, the rate of syrup application at the start is 20 ml/min, and this rate is held for 4 minutes at which point the rate of syrup application is raised to 22 ml/min, and so on. The coating process of Table was completed in 46 minutes to produce a sugar film coat that has the equivalent coating qualities of a panned sugar coat produce with a conventional hard panning process taking about 80 minutes.

**Table**

| Time (min) | Rate of syrup (ml/min) | Drying gas |
|---|---|---|
| 0 | 20 | On |
| 4 | 22 | On |
| 8 | 24 | On |
| 12 | 26 | On |
| 16 | 28 | On |
| 20 | 0 | On |
| 24 | 32 | On |
| 28 | 34 | On |
| 32 | 36 | On |
| 36 | 0 | Off |
| 40 | 0 | On |
| 46 | End of shot cycle | End of shot cycle |

## Claims

1. A method of applying a sugar film coat to centers, the method comprising a coating cycle to impart a coated layer to produce sugar film coated centers, which coating cycle comprises:
a) intermixing the centers in a coating vessel;
b) applying drying gas through the coating vessel, wherein the drying gas provides a drying rate of moisture removal in the coating vessel;
c) spraying a wet sugar syrup at a spraying rate, in an atomized state, onto the centers while intermixing the centers and while applying the drying gas around the centers in the coating vessel to produce wet coated centers having a wet coat, wherein the sugar syrup comprises a crystallizing sugar, and wherein the spraying rate provides a moisture addition rate higher than the drying rate in the coating vessel; and
d) after forming the wet coated center, reducing the spraying rate or stopping the spraying of the wet sugar syrup, while applying the drying gas, to allow the moisture addition rate to be slower than the drying rate in the coating vessel, whereby the wet coated centers lose their moisture to form the sugar film coated center, and wherein the method further comprises a step of repeating one or more of the coating cycles with a wet sugar syrup further comprising a colorant, and wherein the sugar film coating is free of a polymeric film former.

2. The method of claim 1, wherein the atomized sugar syrup has a mean particle size less than 100 µm, optionally a mean particle size between 20 and 50 µm.

3. The method of claim 1, wherein the coated sugar film of each of the coating cycles provides a coating thickness between 10 and 40 µm when the coated sugar film is dried.

4. The method of claim 1, wherein the wet sugar syrup comprises between 45 wt% and 85 wt% of the crystallizing sugar, optionally wherein the wet sugar syrup comprises between 67 wt. % and 76 wt. % of the crystallizing sugar.

5. The method of claim 1, wherein the sugar film coated centers are further coated with a coating cycle comprising:
i) intermixing the centers in a coating vessel,
ii) applying a drying gas around the centers, wherein the drying gas provides a drying rate of moisture in the coating vessel, and
iii) spraying a wet sugar syrup at a spraying rate, in an atomized state, onto the centers while intermixing the centers and while applying the drying gas around the centers to produce covered centers covered with a base sugar coat, wherein the sugar syrup comprises a crystallizing sugar, and wherein the spraying rate provides a moisture addition rate slower than the drying rate of moisture removal in the coating vessel, and
wherein the covered centers are further coated with an outer coat layer using an outer coating method, which outer coating method comprises:
i) intermixing the covered centers in a second coating vessel,
ii) applying second drying gas through the second coating vessel, wherein the drying gas provides a second drying rate of moisture removal in the second coating vessel;
iii) spraying the wet sugar syrup at the second spraying rate, in an atomized state, onto the covered centers while intermixing the covered centers and applying the drying gas around the covered centers to produce a wet coated center having a wet coat layer, wherein the second spraying rate provides a second moisture addition rate higher than the second drying rate in the coating vessel; and
iv) after forming the wet coated center, reducing the second spraying rate or stopping the spraying of the wet sugar syrup, while applying the second drying gas, to allow the second moisture addition rate to be slower than the second drying rate of moisture removal in the second coating vessel, whereby the wet coat layer loses its moisture.

6. The method of claim 5, wherein the coating vessel and the second coating vessel are the same coating vessel.

7. The method of claim 5, wherein the spraying rate and the second spraying rate have one common rate.

8. The method of claim 5, wherein the drying gas and the second drying gas are air and applied at one common rate.

9. A sugar shell coated confectionery product produced using the method of any of claims 1-8, the confectionery product comprising a confectionery center, a sugar shell layer, a transitional layer and a colored layer, wherein the colored layer comprises a colorant, wherein the colored layer is adjacent to the transitional layer that is adjacent to the sugar shell layer, and wherein the transitional layer has a thickness less than 15 µm, and wherein the sugar shell coating is free of a polymeric film former.

10. The confectionery product of claim 9, wherein the sugar shell layer comprises a crystallized sugar, and the colored layer comprises the same crystallized sugar and a colorant, optionally wherein the transition layer has a thickness less than 5 µm

11. The confectionery product of claim 9, wherein the sugar shell layer is a hard sugar shell layer and comprises an outer colored sugar layer and an inner sugar layer, wherein the colored sugar layer comprises a colorant and a crystallized sugar, wherein the sugar layer has a layer thickness and the colored sugar layer has a colored layer thickness, and wherein the sugar layer has a ratio of the colored layer thickness over the sugar layer thickness of from 0.1 to 0.4.

12. The confectionery product of claim 11, wherein the inner sugar layer is an opaque sugar.

## Patentansprüche

1. Verfahren zum Aufbringen einer Zuckerfilmbeschichtung auf Zentren, wobei das Verfahren einen Beschichtungszyklus zum Verleihen einer Beschichtungsschicht zur Herstellung von zuckerfilmbeschichteten Zentren umfasst, wobei der Beschichtungszyklus umfasst:
a) Vermischen der Zentren in einem Beschichtungsgefäß;
b) Aufbringen von Trocknungsgas durch das Beschichtungsgefäß, wobei das Trocknungsgas eine Trocknungsrate von Feuchteentfernung in dem Beschichtungsgefäß bereitstellt;
c) Sprühen eines feuchten Zuckersirups mit einer Sprührate in einem zerstäubten Zustand auf die Zentren unter Vermischen der Zentren und unter Aufbringen des Trocknungsgases um die Zentren in dem Beschichtungsgefäß, um feuchtbeschichtete Zentren mit einer feuchten Beschichtung zu erzeugen, wobei der Zuckersirup einen kristallisierenden Zucker umfasst und wobei die Sprührate eine Feuchtezufuhrrate von höher als die Trocknungsrate in dem Beschichtungsgefäß bereitstellt; und
d) nach Bilden des feuchtbeschichteten Zentrums Verringern der Sprührate oder Beenden des Sprühens des feuchten Zuckersirups unter Aufbringen des Trocknungsgases, um zu erlauben, dass die Feuchtezufuhrrate langsamer als die Trocknungsrate des Beschichtungsgefäßes ist, wodurch die feuchtbeschichteten Zentren ihre Feuchte verlieren, um das zuckerfilmbeschichtete Zentrum zu bilden, und wobei das Verfahren ferner einen Schritt des Wiederholens eines oder mehrerer der Beschichtungszyklen mit einem feuchten Zuckersirup ferner umfassend ein Farbmittel umfasst, und wobei die Zuckerfilmbeschichtung frei von einem polymeren Filmbildner ist.

2. Verfahren gemäß Anspruch 1, wobei der zerstäubte Zuckersirup eine mittlere Partikelgröße von weniger als 100 um, gegebenenfalls eine mittlere Partikelgröße zwischen 20 und 50 um, aufweist.

3. Verfahren gemäß Anspruch 1, wobei der geschichtete Zuckerfilm bei jedem der Beschichtungszyklen eine Beschichtungsdicke zwischen 10 und 40 um, wenn der geschichtete Zuckerfilm getrocknet ist, bereitstellt.

4. Verfahren gemäß Anspruch 1, wobei der feuchte Zuckersirup zwischen 45 Gew.-% und 85 Gew.-% an dem kristallisierenden Zucker umfasst, gegebenenfalls wobei der feuchte Zuckersirup zwischen 67 Gew.-% und 76 Gew.-% an dem kristallisierenden Zucker umfasst.

5. Verfahren gemäß Anspruch 1,wobei die zuckerfilmbeschichteten Zentren ferner mit einem Beschichtungszyklus beschichtet werden, der umfasst:
i) Vermischen der Zentren in einem Beschichtungsgefäß,
ii) Aufbringen eines Trocknungsgases um die Zentren, wobei das Trocknungsgas eine Trocknungsrate für Feuchte in dem Beschichtungsgefäß bereitstellt, und
iii) Sprühen eines feuchten Zuckersirups mit einer Sprührate in einem zerstäubten Zustand auf die Zentren unter Vermischen der Zentren und unter Aufbringen des Trocknungsgases um die Zentren, um überzogene Zentren, die mit einer Zucker-Grundbeschichtung überzogen sind, zu erzeugen, wobei der Zuckersirup einen kristallisierenden Zucker umfasst und wobei die Sprührate eine Feuchtezufuhrrate bereitstellt, die langsamer als die Trocknungsrate von Feuchteentfernen in dem Beschichtungsgefäß bereitstellt, und
wobei die überzogenen Zentren ferner unter Verwendung eines Außenbeschichtungsverfahrens mit einer äußeren Deckschicht beschichtet werden, wobei das Außenbeschichtungsverfahren umfasst:
i) Vermischen der überzogenen Zentren in einem zweiten Beschichtungsgefäß,
ii) Aufbringen von zweitem Trocknungsgas durch das zweite Beschichtungsgefäß, wobei das Trocknungsgas eine zweite Trocknungsrate von Feuchteentfernung in dem zweiten Beschichtungsgefäß bereitstellt;
iii) Sprühen des feuchten Zuckersirups mit der zweiten Sprührate in einem zerstäubten Zustand auf die überzogenen Zentren unter Vermischen der überzogenen Zentren und Aufbringen des Trocknungsgases um die überzogenen Zentren, um ein feuchtbeschichtetes Zentrum mit einer feuchten Beschichtungsschicht zu erzeugen, wobei die zweite Sprührate eine zweite Feuchtezufuhrrate erzeugt, die höher als die zweite Trocknungsrate in dem Beschichtungsgefäß ist; und
iv) nach Bilden des feuchtbeschichteten Zentrums Verringern der zweiten Sprührate oder Beenden des Sprühens des feuchten Zuckersirups unter Aufbringen des zweiten Trocknungsgases, um zu erlauben, dass die zweite Feuchtezufuhrrate langsamer als die zweite Trocknungsrate von Feuchteentfernung in dem zweiten Beschichtungsgefäß ist, wodurch die feuchte Beschichtungsschicht ihre Feuchte verliert.

6. Verfahren gemäß Anspruch 5, wobei das Beschichtungsgefäß und das zweite Beschichtungsgefäß das gleiche Beschichtungsgefäß sind.

7. Verfahren gemäß Anspruch 5, wobei die Sprührate und die zweite Sprührate eine gemeinsame Rate aufweisen.

8. Verfahren gemäß Anspruch 5, wobei das Trocknungsgas und das zweite Trocknungsgas Luft sind und mit einer gemeinsamen Rate aufgebracht werden.

9. Zuckerhüllenbeschichtetes Konfektprodukt, erzeugt unter Verwendung des Verfahrens gemäß einem der Ansprüche 1-8, wobei das Konfektprodukt ein Konfektzentrum, eine Zuckerhüllenschicht, eine Übergangsschicht und eine gefärbte Schicht umfasst, wobei die gefärbte Schicht ein Farbmittel umfasst, wobei die gefärbte Schicht zu der Übergangsschicht benachbart ist, die zu der Zuckerhüllenschicht benachbart ist, und wobei die Übergangsschicht eine Dicke von weniger als 15 um aufweist und wobei die Zuckerhüllenschicht frei von polymerem Filmbildner ist.

10. Konfektprodukt gemäß Anspruch 9, wobei die Zuckerhüllenschicht einen kristallisierten Zucker umfasst und die gefärbte Schicht den gleichen kristallisierten Zucker und ein Farbmittel umfasst, gegebenenfalls wobei die Übergangsschicht eine Dicke von weniger als 5 um aufweist.

11. Konfektprodukt gemäß Anspruch 9, wobei die Zuckerhüllenschicht eine harte Zuckerhüllenschicht ist und eine äußere gefärbte Zuckerschicht und eine innere Zuckerschicht umfasst, wobei die gefärbte Zuckerschicht ein Farbmittel und einen kristallisierten Zucker umfasst, wobei die Zuckerschicht eine Schichtdicke aufweist und die gefärbte Zuckerschicht eine Dicke der gefärbten Schicht aufweist und wobei die Zuckerschicht ein Verhältnis der Dicke der gefärbten Schicht zu der Zuckerschichtdicke von 0,1 bis 0,4 aufweist.

12. Konfektprodukt gemäß Anspruch 11, wobei die innere Zuckerschicht ein undurchsichtiger Zucker ist.

## Revendications

1. Procédé d'application d'une couche de film de sucre sur des centres, le procédé comprenant un cycle de revêtement pour conférer une couche revêtue pour produire des centres revêtus d'un film de sucre, lequel cycle de revêtement comprend :
a) le mélange des centres dans une cuve de revêtement ;
b) l'application d'un gaz de séchage à travers la cuve de revêtement, dans lequel le gaz de séchage fournit une vitesse de séchage d'élimination d'humidité dans la cuve de revêtement ;
c) la pulvérisation d'un sirop de sucre humide à une vitesse de pulvérisation, à un état atomisé, sur les centres tout en mélangeant les centres et tout en appliquant le gaz de séchage autour des centres dans la cuve de revêtement pour produire des centres revêtus humides ayant un revêtement humide, dans lequel le sirop de sucre comprend un sucre cristallisant, et dans lequel la vitesse de pulvérisation fournit une vitesse d'ajout d'humidité supérieure à la vitesse de séchage dans la cuve de revêtement ; et
d) après formation du centre revêtu humide, la réduction de la vitesse de pulvérisation ou l'arrêt de la pulvérisation du sirop de sucre humide, tout en appliquant le gaz de séchage, pour permettre à la vitesse d'ajout d'humidité d'être plus lente que la vitesse de séchage dans la cuve de revêtement, moyennant quoi les centres revêtus humides perdent leur humidité pour former le centre revêtu d'un film de sucre, et le procédé comprenant en outre une étape de répétition d'un ou plusieurs des cycles de revêtement avec un sirop de sucre humide comprenant en outre un colorant, et dans lequel le revêtement de film de sucre est exempt d'un agent filmogène polymérique.

2. Procédé selon la revendication 1, dans lequel le sirop de sucre atomisé a une taille moyenne de particule inférieure à 100 um, éventuellement une taille moyenne de particule comprise entre 20 et 50 µm.

3. Procédé selon la revendication 1, dans lequel le film de sucre revêtu de chacun des cycles de revêtement fournit une épaisseur de revêtement comprise entre 10 et 40 um lorsque le film de sucre revêtu est séché.

4. Procédé selon la revendication 1, dans lequel le sirop de sucre humide comprend entre 45 % en poids et 85 % en poids du sucre cristallisant, éventuellement dans lequel le sirop de sucre humide comprend entre 67 % en poids et 76 % en poids du sucre cristallisant.

5. Procédé selon la revendication 1, dans lequel les centres revêtus d'un film de sucre sont en outre revêtus avec un cycle de revêtement comprenant :
i) le mélange des centres dans une cuve de revêtement,
ii) l'application d'un gaz de séchage autour des centres, dans lequel le gaz de séchage fournit une vitesse de séchage d'humidité dans la cuve de revêtement, et
iii) la pulvérisation d'un sirop de sucre humide à une vitesse de pulvérisation, à un état atomisé, sur les centres tout en mélangeant les centres et tout en appliquant le gaz de séchage autour des centres pour produire des centres couverts recouverts d'une couche de sucre de base, dans lequel le sirop de sucre comprend un sucre cristallisant, et dans lequel la vitesse de pulvérisation fournit une vitesse d'ajout d'humidité plus lente que la vitesse de séchage d'élimination d'humidité dans la cuve de revêtement, et
dans lequel les centres couverts sont en outre revêtus d'une couche de revêtement externe à l'aide d'un procédé de revêtement externe, lequel procédé de revêtement externe comprend :
i) le mélange des centres couverts dans une deuxième cuve de revêtement,
ii) l'application d'un deuxième gaz de séchage à travers la deuxième cuve de revêtement, dans lequel le gaz de séchage fournit une deuxième vitesse de séchage d'élimination d'humidité dans la deuxième cuve de revêtement ;
iii) la pulvérisation du sirop de sucre humide à la deuxième vitesse de pulvérisation, à un état atomisé, sur les centres couverts tout en mélangeant les centres couverts et en appliquant le gaz de séchage autour des centres couverts pour produire un centre revêtu humide ayant une couche de revêtement humide, dans lequel la deuxième vitesse de pulvérisation fournit une deuxième vitesse d'ajout d'humidité plus élevée que la deuxième vitesse de séchage dans la cuve de revêtement ; et
iv) après formation du centre revêtu humide, la réduction de la deuxième vitesse de pulvérisation ou l'arrêt de la pulvérisation du sirop de sucre humide, tout en appliquant le deuxième gaz de séchage, pour permettre à la deuxième vitesse d'ajout d'humidité d'être plus lente que la deuxième vitesse de séchage d'élimination d'humidité dans la deuxième cuve de revêtement, moyennant quoi la couche de revêtement humide perd son humidité.

6. Procédé selon la revendication 5, dans lequel la cuve de revêtement et la deuxième cuve de revêtement sont la même cuve de revêtement.

7. Procédé selon la revendication 5, dans lequel la vitesse de pulvérisation et la deuxième vitesse de pulvérisation ont une vitesse commune.

8. Procédé selon la revendication 5, dans lequel le gaz de séchage et le deuxième gaz de séchage sont de l'air et sont appliqués à une vitesse commune.

9. Produit de confiserie revêtu par une enveloppe de sucre produit en utilisant le procédé selon l'une quelconque des revendications 1-8, le produit de confiserie comprenant un centre de confiserie, une couche enveloppe de sucre, une couche transitoire et une couche colorée, dans lequel la couche colorée comprend un colorant, dans lequel la couche colorée est adjacente à la couche transitoire qui est adjacente à la couche enveloppe de sucre, et dans lequel la couche transitoire a une épaisseur inférieure à 15 um, et dans lequel le revêtement d'enveloppe de sucre est exempt d'un agent filmogène polymérique.

10. Produit de confiserie selon la revendication 9, dans lequel la couche enveloppe de sucre comprend un sucre cristallisé, et la couche colorée comprend le même sucre cristallisé et un colorant, éventuellement dans lequel la couche transitoire a une épaisseur inférieure à 5 µm.

11. Produit de confiserie selon la revendication 9, dans lequel la couche enveloppe de sucre est une couche enveloppe de sucre dure et comprend une couche de sucre colorée externe et une couche de sucre interne, dans lequel la couche de sucre colorée comprend un colorant et un sucre cristallisé, dans lequel la couche de sucre a une épaisseur de couche et la couche de sucre colorée a une épaisseur de couche colorée, et dans lequel la couche de sucre a un rapport de l'épaisseur de couche colorée sur l'épaisseur de couche de sucre allant de 0,1 à 0,4.

12. Produit de confiserie selon la revendication 11, dans lequel la couche de sucre interne est un sucre opaque.
